Europäisches Patentamt

(19) European Patent Office

Office européen des brevets

(11) Publication number: **0 068 873**
**B1**

(12) EUROPEAN PATENT SPECIFICATION

(45) Date of publication of patent specification: **08.10.86**

(21) Application number: **82303378.2**

(22) Date of filing: **28.06.82**

(51) Int. Cl.⁴: **B 32 B 3/12, E 04 B 2/74,**
**E 04 C 2/36, E 04 H 1/12**

(54) Composite boards and panels.

(30) Priority: **26.06.81 GB 8119783**
**12.02.82 GB 8204100**

(43) Date of publication of application:
**05.01.83 Bulletin 83/01**

(45) Publication of the grant of the patent:
**08.10.86 Bulletin 86/41**

(84) Designated Contracting States:
**DE FR GB NL**

(56) References cited:
**CH-A- 342 517**
**GB-A-1 240 516**
**GB-A-1 320 708**
**US-A-4 117 199**

(73) Proprietor: **Quinton & Kaines (Holdings) Limited**
**Creeting Road**
**Stowmarket Suffolk (GB)**

(72) Inventor: **Kaines, Colin Charles**
**Park Gate Lower Road Onehouse**
**Stowmarket Suffolk (GB)**

(74) Representative: **Clifford, Frederick Alan et al**
**MARKS & CLERK 57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to composite panels.

As used herein the term "panel" relates to a composite layered material of a size and shape as produced by the manufacturing process of the nature described in more detail below or by similar or related manufacturing processes, provided with a surround and/or internal longitudinal support strips e.g. battens or rails, whether made up during manufacture of the layer of material or afterwards. The rails or battens can be made of timber, strips of medium density fibre (MDF) board or wood particle board, or of metal.

While panels of the invention may be used in permanent constructions, or elements thereof, such as doors or suspended ceilings, the invention relates more specifically to light-weight composite panels suitable for example for use in construction of temporary structures such as exhibition stands or for the fabrication of display materials such as hanging signs in supermarkets or like premises.

Composite panels composed of or faced with cellulosic fibrous layers are already known. Typically, they consist of a relatively thick central layer generally known as the "core" to provide the necessary bulk and thinner facing layers, one on each face of the central layer, to provide the desired appearance, rigidity and surface characteristics.

The facing layers known in this technology can be of plywood, for example the 3-ply or 4-ply surface panels used in preparation of flush doors. They can also be manufactured wood fibre boards such as hardboard or medium density fibre (MDF) board. They can alternatively be made of wood particle board, high pressure laminates, and single thicknesses of wood-based laminating materials.

A typical example of this technology is described in GB—A—1 240 516, in which plywood or hardboard layers are adhered to a "honeycomb" paper core. This earlier invention envisages treatment of these plywood or like layers with a water-based adhesive and adhered water-impervious foils, to preserve the doors against external humidity changes.

Of recent years there have been proposals to provide panels in which facing layers are of thick paper or paper board e.g. cardboard. In practice, however, such panels while commercially and structurally attractive because of the low weight per unit area are difficult to manufacture and use.

Hitherto, useful panels could only be obtained and successfully used if three conditions were met. Firstly, great care must be taken to bring the facing layers to the same relative moisture content as each other prior to assembly. Secondly, great care must be taken to ensure that the gauge and the hygroscopic properties of the two facing layers are the same on both faces of the composite material. Even then, variability from one batch of such material to the next (or even within the same batch) may be encountered. Thirdly, care must be taken in applying adhesive to such facing layers during assembly since the adhesives used are usually water-based and usually need to be spread on the inner surfaces of the facing layers in amounts which must be kept as low as possible and as uniform as possible over different parts of each sheet. When the panels have been manufactured, using all the aforementioned precautions, they are still vulnerable to warping, bending, bowing or twisting when in use as cladding materials for exhibition stands, signs or for any other use. This is because none of the manufacturing precautions can be applied with absolute reliability and also because, in use, the panels are subjected to widely varying environments of temperature, relative humidity and differential treatment and exposure on each face of the panels. Since typically such panels may be decorated with expensive artwork and used in a visually prominent position, such warping is totally unacceptable.

Any such warping, bending, bowing or twisting of the panels is mainly due to deimensional changes arising from the uptake or loss of moisture in the facing layers. Typically, these changes are non-uniform and vary as between different panel directions, that is to say, those directions corresponding to the "machine" or the "transverse" directions of the surface layer when originally produced.

The present invention is based upon the realisation that these dimensional problems arising from moisture vapour or water uptake are predominantly a "skin" effect and can be controlled by preventing water, whether in liquid or vapour form and whether arising from the advesive during manufacture or from atmospheric water vapour during use, from entering or leaving the surface layer as such.

It is the object of the present invention to provide a composite panel according to the above mentioned species and a method for the production of such a composite panel which is free of irreversible warping or twisting, respectively, in spite of the use of paper board for the facing layers.

In one aspect the invention provides a composite panel of the type comprising a surrounding wooden frame, a lightweight central core of paper of honeycomb-like structure and adhered thereto on both faces a facing layer, each such facing layer being itself covered on both inner and outer faces with a layer of material impervious to water in liquid or vapour form, characterised in that the facing layer is paperboard and in that the water-impervious layer consists of an adherent polymer coating directly applied in a water- and solvent-free manner to the surface of the facing layer.

US—A—4 117 199 describes the moisture-proofing and water-proofing of paper by dipping the paper into an aqueous emulsion of rubber latex and wax, and thereafter drying the paper to drive off water and melt the wax. In the panel-manufacturing context of the present invention, such treatment with large quantities of water is strongly contra-indicated, and not to be confused with the procedure now proposed in which the direct application of the water-impervious polymer layers to the intermediate paper board layer no water or moisture will entrap within the paper board layer no water or moisture which would normally cause the above mentioned distortion.

In a variant form of the invention an additional applied layer of paper less than one tenth of the thickness of the paperboard, or of a metal foil, or of a further polymeric foil covers at least one of the two outermost surfaces of the water-impervious layer.

The use of aluminium foil e.g. from 0.005 to 0.1 mm thick as the additional applied layer is particularly useful when the final panel is required to have surfaces of low spread of flame, for example, Class 1 in accordance with BS476: Part 7. Such layers can, if desired, be coated with a non-inflammable lacquer, but this is not essential.

Usually, however, the thin additional layer is a paper layer. It can be provided on both external faces of the coated cardboard facing layer, whereby in one instance it faces outwards to be the outermost layer of the panel, and in the other it faces inwards to be a contact layer to ensure good adhesion to the core. Alternatively, the outermost surface of one water-impervious layer may be covered with the said aluminium foil and the other water-impervious layer may be covered on its outermost layer surface with the said layer of paper less than one tenth of the thickness of the paper board. In cases where there is no such inner paper layer (next to the core) a surface treatment of the inner inert layer, e.g. by flame oxidation or by corona discharge is advantageous to ensure good core adhesion.

When a paper layer is present on an external face of the cladding layer it will be advantageous to provide a somewhat thicker inert layer than would be used for an uncovered inert layer.

The central layer or core is of paper "honeycomb". This is a succession of strips or carboard or paper each strip being adhered to adjacent strips at a number of transverse lines across each of its surfaces. The lines of adhesion on one surface are staggered in relation to those on the other surface, whereby the structure, when opened out at right angles to the strip surfaces has a cellular honeycomb like appearance.

We have discovered that the expansion or contraciton of the facing due to changes in moisture content of the atmosphere, or due to the use of water-based adhesives during the manufacture of composite panels is greatly diminished by the use of coated facing layers as described above.

It is a particular feature of the invention that by providing effectively inert and moisture-impervious surface layers, not sensitive to changes in relative humidity, the manufacturing process and the final use of the invention are both improved. It is additionally advantageous that materials of different types, or if of the same type of different gauges, can be used on each face of the central layer or core; hitherto the two faces have been balanced by using facing material of the same gauge, since even if the cellulosic material were previously equilibrated for moisture content the difference of gauge of material in the prior art would itself lead to warping even when minor humidity changes took place. However, according to the present invention a relatively thicker gauge material can be applied to one surface, that is to say, the normally outer surface of a panel as used for example in an exhibition stand or similar lightweight construction, and a thinner gauge material can be provided on an inner or protected surface of such panel.

We have further discovered that the structure as defined above according to the invention possesses further advantages over known prior art structures. A known defect of composite panels, especially when only a thin cladding layer is used (e.g. of carboard) is the so-called "core shadow" or "frame shadow". This is a faint mottling of the surface corresponding to the underlying core structure or frame elements and appears to be an effect related to differential stretching and contraction of fibres in the facing layers due to humidity changes. In the structure as described above and in accordance with the invention, such core shadow or frame shadow does not manifest itself since the facing layers are themselves protected on both surfaces by the inert layer.

The inert layer in each case are synthetic polymeric layers. These can be applied by spraying, dipping, or painting e.g. by roller coating, but are most preferably applied by extrusion of a molten film from a slit die directly on to the surface in all cases without the use of any water-based solvent or adhesive. Alternatively, a film of material can be unwound from a roll and adherently pressed, possibly with application of heat or other suitable expedient, on to both surfaces of the layers to form a laminate.

Suitable polymeric materials are polyolefinic in nature such as polyethylene, polypropylene, or ethylene-propylene copolymer. They can also be plasticised polyvinyl chloride, or can be polyvinylidene chloride since this has a specially high resistance to water vapour.

Preferred numerical limitations on the composite material can be broadly stated without limiting the broad scope of the invention as described above. The central or core layer can be from 3 to 75 for example 6 to 50 mm in thickness. The paper or paperboard can be for instance from 0.15 to 3 e.g. from 0.5 to 3 mm in thickness as a preferred range, e.g. 250—1500 gsm (grams per sq. metre).

The inert barrier layer on either side of this surface can generally be applied in a coating weight of from 10 to 100 grams per square metre, depending on e.g. the polymer used and the degree of protection necessary. Thus, for low density polyethylene the minimum coating weight is preferably 20 to 25 gsm, and if one or both of the inert barrier layers is to be paper-covered the minimum is preferably increased to 30 to 40 gsm. If one or both or the inert barrier layers is to be covered with metal foil or some other impervious foil, the lower of these coating weight minimum ranges will be found adequate.

The adhesive used to bond the surface layers as described above on to the central or core layer of the composite panels are usually water-based such as urea-formaldehyde resin solution (applied e.g. at 150—300 gsm of 50—80% solid content solution) or the polyvinylacetate based emulsion adhesives.

The invention further extends to a method of manufacturing composite panels as described above in which paperboard facing layers clad with the water impervious polymer layers are subjected to a corona discharge treatment on one face each, arranged in face-to-face pairs with the corona-discharge treated faces outwards, and provided with adhesive layers on each such free-outer face, with pairs of facing sheets are stacked alternately with cores and surrounding frame elements to provide a supply of wet composite panels, and these wet composite panels are thereafter either

(a) hot-pressed as a stack and thereafter separated, or

(b) separated into individual panels and individually hot-pressed.

Alternatively, paperboard facing layers clad with the water-imperivous polymer layers are subjected to a corona-discharge treatment on one face each, arranged in face-to-face pairs with the corona-discharge treated faces outwards and provided with adhesive layers on each free outer face, the facing layers of each pair are separated and applied with their adhesive surfaces each to one of a core and surrounding frame elements to provide a wet composite panel, and this panel is individually hot-pressed. In either case, the object is to ensure that each central or core layer is permanently adhered to a facing layer on each face.

Facing sheets may be selected with one clad surface itself provided with a paper or foil lamination and the other surface otherwise treated to facilitate adhesion. In such cases the method is carried out by placing the facing sheets in pairs with paper or foil surfaces in contact.

If different thicknesses of facing sheets are used it is preferred to place them in pairs with one of each thickness, whereby the eventual composite board has one surface of different strength from the other.

In another method for the production of composite panels two facing sheets are glued at a time and placed one each side of a single central core layer. The wet composite is then mechanically moved forward into a single-opening hot press with a very short press cycle time. On opening the press, the pressed panel is automatically ejected and the press refilled with another wet composite.

As a step in production of such panels, composite boards with cardboard facing layers may also be produced by continuous production processes. Typically, the cardboard facing materials are on large reels, and can therefore be continuously unwound, coated with adhesive and continuously pressed on to the central or core layer of the boards supplied as a roll, as from a folded "magazine" or as a sequence of abutting sheets. This gives a continuous band of composite board, which is cut to the required length for manufacture of panels by a traversing saw or cutter.

The invention will be further described with reference to the accompanying drawings, in which:—

Figures 1 to 4 are diagrammatic fragmentary cross-sections of panels according to the invention.

Figure 5 is a partial diagrammatic cross-section of a panel according to the invention, and

Figure 6 is a graph showing the dimensional changes in an untreated cardboard material against changes of water content.

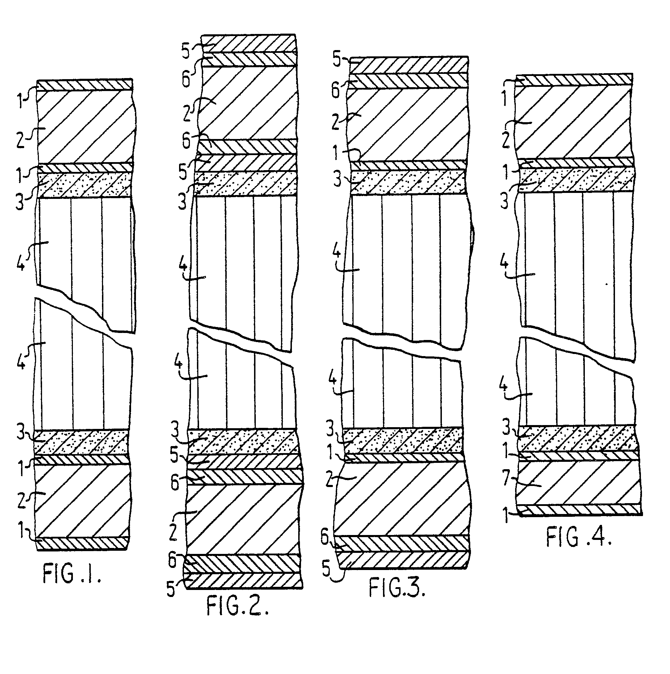

Figure 1 shows inert thin layers 1 of polymeric material covering both surfaces of a cardboard material 2 to form a laminate adhered by adhesive layer 3 to either face of a paper honeycomb core 4. The dimensions shown are in any case not to scale, but since the core thickness 4 is so much greater than the facing layer thickness (about 3 to 20 times) it is shown discontinued in the drawing. Example 1 gives details of materials and dimensions of a typical such product.

Figure 2 is generally similar but possesses thicker polymer layers 6 to which outermost paper layers 5 are laminated without the use of adhesive. The paper layers form a suitable basis for adhesion (at 3) or for external decoration. Example 2 gives details of materials and dimensions.

Figure 3 shows a composite panel portion in which the inner surface of the cardboard layer 2 possesses a thin polymeric layer 1 while the outer surface possesses the two layers 5 and 6 as in Figure 2. Example 3 describes a typical such material in more detail.

Figure 4 shows a composite panel identical at one facing layer to that board in Figure 1. The other facing layer, however, is based upon thinner cardboard 7, having the same thin polymer coating 1. Example 4 describes this material in more detail.

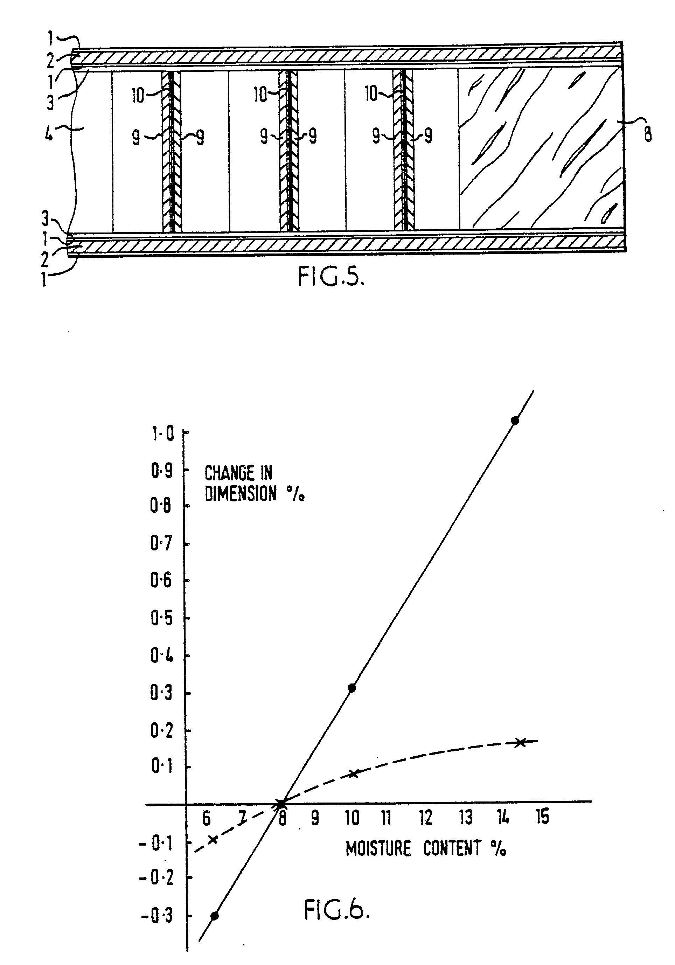

Figure 5 shows assembly of a laminate as shown in Figure 1 (the reference numerals being therefore identical) to a peripheral wooden batten 8 as part of a panel. Figure 5 also shows in more detail a cross-section of the paper honeycomb, with a double thickness of paper at 9 adhered to layer 10.

Figure 6 is a graph of moisture content of carboard material *per se* in weight percent plotted against percentage dimensional change. It is apparent that the transverse dimensional change as shown by the full line (in relation to the machine direction of original manufacture) is much more marked than longitudinal dimensional change as shown by the dotted line.

Readings were taken at 31%, 50%, 60% and 85% relative humidity of the environment, with the 50% value (in equilibrium at approximately 8% water content) taken as the datum line.

Surfacing the cardboard with an inert polymer as a barrier layer decreased the slope of both curves, and was especially valuable in controlling troublesome transverse expansion tendency.

The invention will be further described with reference to the following non-limiting Examples.

### Example 1

Cardboard 1 mm in thickness was coated with molten low density polyethylene (LDPE) on both sides, using slit extrusion dies, cooled to solidify the polymer and treated with ultra-violet light and/or by a flame treatment and/or a corona discharge on each polymer surface prior to winding in reels. The coating weight of polymer on each side was 23 $g/m^2$ (gsm), equivalent to a notional coating thickness of 0.025 mm, whereby each coated surface of the cardboard possesses a water vapour transmission of not greater than 16 $g/m^2$ for 24 hours at 38°C at a water vapour pressure gradient of 90% to a notional zero percentage within the coardboard, i.e. $0.0608/cm^2$abs.

A paper honeycomb core material known *per se*, made of cardboard about 0.25 mm thick was cut into 20 mm wide strips which were expanded to give an expanded area of 15 mm hexagonal cell size, measured as the diameter of the inserted circle. From this area was cut a rectangle 2400 by 1200 mm, which if necessary was heat-treated to provide handling stability.

The coated cardboard was cut into unit lengths of the same size which were assembled in face-to-face pairs and passed as such through the nip of a glueing roller to give on each outer face a loading of 220 gms of an aqueous solution of urea-formaldehyde resin of solids content 60%.

A first double sheet of the adhesive-carrying coated cardboard was placed on a table, and a first sheet of the expanded paper honeycomb material was aligned therewith and superimposed thereon. Thereafter, and similarly, an alternation of double sheets of cardboard, and of paper honeycomb was built up to provide a suitable stack of wet composite panels for handling. The uppermost layer of paper honeycomb is conveniently covered with the lowest sheet of cardboard, when this is separated from its neighbour. The stack used was 24-high, but could be from 8 to 48-high depending on operating convenience, and to some extent the catalyst used in the adhesive.

The stack was conveyed to an 8-daylight press with heated platens where in each cycle eight composite boards, each consisting of a paper honeycomb layer with adherent coated cardboard sheets on each face, were pressed individually between platens at 70° for 5—7 minutes at 14 psi (pounds per square inch), the temperature chosen being the maximum at which the polymer layer itself does not begin to soften, and the pressure being related to the cell and core thickness, usually within the range 5 to 30 psi. (One psi approximately equals 0.069 bar).

The individual panels were then unloaded and trimmed, to give a product in which warping was minimal and subsequent warping in use was not significant.

### Example 2

Cardboard 1 mm in thickness (about 650 gsm) was coated as before with LDPE but to a coating thickness on both sides of 34 gsm and an additional thin paper layer of 39 gsm was laminated to each polymer layer without use of adhesive. No corona discharge or like treatment was used.

Subsequent procedure was as described in Example 1, to give a panel which was essentially unwarped at the end of the manufacturing process and which resisted warping in use. The cardboard sheets were adhered to the paper honeycomb by urea-formaldehyde adhesive, and the outer paper surfaces of each composite were readily decorable even with water-based paints. The 39 gsm paper external surfaces did not cause 650 gsm cardboard facing layers to warp the composite.

### Example 3

Cardboard 650 gsm in thickness was coated on one face with 34 gsm LPDE and a 39 gsm thin paper laminate superficial layer and on the other face with a 23 gsm LDPE layer which was treated with a corona discharge and ultra-violet light as in Example 1.

The coated cardboard was cut to unit sizes which were placed in face-to-face pairs having their paper laminate superficial layers adjacent. The glueing, stacking and pressing stages were carried out as before, to give a composite unwarped by manufacture and resistant to warping in use. In the composite the outer, thicker, polymer layer on each cardboard facing layer, which is paper-covered and decoratable resists water transmission since its 34 gsm thickness is sufficient to separate any possible contact between the fibres protruding from the superficial paper and the cardboard. The inner 23 gsm polymer layer is thinner since it has effective contact with cellulosic fibres from one face only and is in any case in a relatively protected position, next to the core, in relation to water or water vapour when in use.

### Example 4

The procedure of Example 1 was repeated except that the different grades of cardboard, one of 650 gsm and the other of 350 gsm were used. These were coated, treated with corona discharge, and arranged in face-to-face pairs containing one sheet of each grade separating the core layers. The composites produced had one face of 650 gsm cardboard, for use as an outer face in a construction, and one of 350 gsm cardboard as in inner face for a more protected location. However, since the cardboard layers were in each case protected by the inert layers of polymer there was no warping on manufacture and resistance to warping in use.

## Claims

1. A composite panel of the type comprising a surrounding wooden frame, a lightweight central core of paper of honeycomb-like structure and adhered thereto on both faces, a facing layer each such facing layer being itself covered on both inner and outer faces with a layer of material impervious to water in liquid or vapour form, characterised in that the facing layer is paperboard and in that the water-impervious layer consists of an adherent polymer coating directly applied in a water- and solvent-free manner to the surface of the facing layer.

2. A composite panel as claimed in claim 1, characterised in that an additional applied layer of paper less than one tenth of the thickness of the paperboard or of a metal foil, or of a further polymeric foil covers at least one of the two outermost surfaces of the water-impervious layer.

3. A composite panel as claimed in claim 2, characterised in that the additional applied layer is an aluminium foil from 0.005 to 0.1 mm thick.

4. A composite panel as claimed in claim 3, characterised in that the outermost surface of one water-impervious layer is covered with the said aluminium foil and the other water-impervious layer is covered on its outermost layer surface with the said layer of paper less than one tenth of the thickness of the paperboard.

5. A composite panel as claimed in any one of claims 1 to 4, characterised in that the central core layer is from 3 to 75 mm in thickness.

6. A composite panel as claimed in any one of claims 1 to 5, characterised in that the facing layer is from 0.15 to 3 mm in thickness.

7. A composite panel as claimed in any one of claims 1 to 6, characterised in that each water-impervious layer has a thickness corresponding to a coating weight of 10 to 100 g/m$^2$.

8. A composite panel as claimed in any of claims 1, 2 and 5 to 7, characterised in that the water-impervious layer is coated with paper and has a minimum thickness corresponding to a 30 g/m$^2$ coating weight.

9. A composite panel as claimed in any one of claims 1 to 3 and 5 to 7, characterised in that the water-impervious layer is coated with metal foil, and has a minimum thickness corresponding to a 20 g/m$^2$ coating weight.

10. A method for the production of composite panels as claimed in claim 1, characterised in that the paperboard facing layers clad with the water-impervious polymer layers are subjected to a corona discharge treatment on one face each, arranged in face-to-face pairs with the corona-discharge treated faces outwards, and provided with adhesive layers on each such free-outer face, with pairs of facing layers stacked alternately with cores and surrounding wooden frame elements to provide a supply of wet composite panels, and these wet composite panels are thereafter either (a) hot pressed as a stack and thereafter separated or (b) separated into individual panels and individually hot-pressed.

11. A method for the production of composite panels as claimed in claim 1, characterised in that paperboard facing layers clad with the water-impervious polymer layers are subjected to a corona-discharge treatment on one face each, arranged in face-to-face pairs with the corona-discharge treated faces outwards and provided with adhesive layers on each free outer face, the facing layers of each pair are separated and applied with their adhesion surfaces each to one of a core and surrounding wooden frame elements to provide a wet composite panel, and this panel is individually hot-pressed.

## Revendications

1. Panneau composite comportant un cadre périphérique en bois, une âme centrale légère en papier ayant une structure en forme de nid d'abeille et une couche surfacique collée sur chaque face de cette âme, chaque couche surfacique étant elle-même recouverte à la fois sur sa face interne et sur sa face externe par une couche d'un matériau imperméable à l'eau sous forme liquide ou sous forme de vapeur, caractérisé en ce que la couche surfacique est en carton et en ce que la couche imperméable à l'eau est un revêtement polymère adhésif directement appliqué par un procédé sans eau ni solvant sur la surface de la couche surfacique.

2. Panneau composite selon la revendication 1, caractérisé en ce qu'une couche de papier supplémentaire, d'une épaisseur inférieure à un dixième de l'épaisseur du carton, ou une feuille métallique, ou une autre feuille polymère recouvre au moins l'une des deux surfaces extérieures de la couche imperméable à l'eau.

3. Panneau composite selon la revendication 2, caractérisé en ce que la couche supplémentaire est une feuille d'aluminium de 0,005 à 0,1 mm d'épaisseur.

4. Panneau composite selon la revendication 3, caractérisé en ce que la surface extérieure d'une couche imperméable à l'eau est recouverte par la feuille d'aluminium et que l'autre couche imperméable à l'eau est recouverte sur sa surface extérieure par la couche de papier ayant une épaisseur inférieure à un dixième de l'épaisseur du carton.

5. Panneau composite selon l'une quelconque des revendications 1 à 4, caractérisé en ce que la couche d'âme centrale a de 3 à 75 mm d'épaisseur.

6. Panneau composite selon l'une quelconque des revendications 1 à 5, caractérisé en ce que la couche surfacique a une épaisseur de 0,15 à 3 mm.

7. Panneau composite selon l'une quelconque des revendications 1 à 6, caractérisé en ce que chaque couche imperméable à l'eau a une épaisseur correspondant à un poids de revêtement de 10 à 100 g/m$^2$.

8. Panneau composite selon l'une quelconque des revendications 1, 2 et 5 à 7, caractérisé en ce que la couche imperméable à l'eau est revêtue d'un papier et a une épaisseur minimale correspondant à un poids de revêtement de 30 g/m².

9. Panneau composite selon l'une quelconque des revendications 1 à 3 et 5 à 7, caractérisé en ce que la couche imperméable à l'eau est revêtue d'une feuille métallique, et a une épaisseur minimale correspondant à un poids de revêtement de 20 g/m².

10. Procédé pour la production de panneaux composites selon la revendication 1, caractérisé en ce que les couches surfaciques en carton, revêtues par les couches polymères imperméables à l'eau, sont soumises à un traitement par décharge corona sur une face chacune, sont disposées face à face par paires avec les faces traitées par décharge corona à l'extérieur, et sont pourvues de couches adhésives sur chaque face extérieure libre, avec des paires de couches surfaciques empilées alternativement avec des âmes et des éléments de cadre périphériques en bois pour procurer une source de panneaux composites humides, et en ce que ces panneaux composites humides sont ensuite, soit (a) pressés à chaud en piles et ensuite séparés, soit (b) séparés en panneaux individuels et pressés à chaud individuellement.

11. Procédé pour la production de panneaux composites selon la revendication 1, caractérisé en ce que les couches surfaciques en carton, revêtues des couches polymères imperméables à l'eau, sont soumises à un traitement par décharge corona sur chaque face chacune, sont disposées face à face par paires avec les faces traitées par décharge corona vers l'extérieur et sont pourvues de couches adhésives sur chaque face extérieure libre, en ce que les couches surfaciques de chaque paire sont séparées et appliquées avec leurs surfaces d'adhérence chacune sur une âme et les éléments de cadre en bois l'environnant pour procurer un panneau composite humide, et en ce que ce panneau est individuellement pressé à chaud.

**Patentansprüche**

1. Ein zusammengesetztes Paneel, bestehend aus einem äußeren Holzrahmen, aus einem leichten zentralen Kern aus Papier in Wabenstruktur und damit verbundenen Deckauflagen an beiden Seiten, wobei eine jede Deckauflage sowohl auf ihrer Innenfläche als auch auf ihrer Außenfläche ihrerseits mit einer Beschichtung versehen ist, die gegenüber Wasser in flüssiger Form oder in Dampfform undurchlässig ist, dadurch gekennzeichnet,

daß die Deckauflagen aus Kartonpappe und die wasserundurchlässigen Schichten aus anhaftenden Polymerbeschichtungen bestehen, die wasser- und lösungsmittelfrei direkt auf die Deckauflagen aufgebracht sind.

2. Zusammengesetztes Paneel nach Anspruch 1, dadurch gekennzeichnet,

daß zumindest eine der beiden Außenflächen der wasserundurchlässigen Schicht mit einer zusätzlichen Papierschicht von weniger als ein Zehntel der Dicke der Kartonpappe oder mit einer Metallfolie oder mit einer weiteren und zusätzlichen Polymerfolie versehen ist.

3. Zusammengesetztes Paneel nach Anspruch 2, dadurch gekennzeichnet,

daß es sich bei der aufgebrachten zusätzlichen Schicht um eine Aluminiumfolie mit einer Dicke von 0,005 mm bis 0,1 mm handelt.

4. Zusammengesetztes Paneel nach Anspruch 3, dadurch gekennzeichnet,

daß die Außenfläche einer der wasserundurchlässigen Schichten mit der vorerwähnten Aluminiumfolie und die Außenfläche der anderen Wasserundurchlässigen Schicht mit der vorerwähnten Papierschicht, die eine Dicke von weniger als ein Zehntel der Kartonpappe hat, beschichtet ist.

5. Zusammengesetztes Paneel nach einem der Ansprüche 1 bis 4, dadurch gekennzeichnet,

daß der zentrale Kern eine Dicke von 3 mm bis 75 mm hat.

6. Zusammengesetztes Paneel nach irgendeinem der Ansprüche 1 bis 5, dadurch gekennzeichnet,

daß die Deckauflage eine Dicke von 0,15 mm bis 3 mm hat.

7. Zusammengesetztes Paneel nach einem der Ansprüche 1 bis 6, dadurch gekennzeichnet,

daß jede wasserundurchlässige Schicht eine Dicke hat, die einem Beschichtungsgewicht von 10 bis 100 g/m² entspricht.

8. Zusammengesetztes Paneel nach einem der Ansprüche 1, 2 und 5 bis 7, dadurch gekennzeichnet,

daß die wasserundurchlässige Schicht mit Papier beschichtet ist und eine Mindestdicke hat, die einem Beschichtungsgewicht von 30 g/m² entspricht.

9. Zusammengesetztes Paneel nach einem der Ansprüche 1 bis 3 und 5 bis 7, dadurch gekennzeichnet,

daß die wasserundurchlässige Schicht mit Metallfolie beschichtet ist und eine Mindestdicke hat, die einem Beschichtungsgewicht von 20 g/m² entspricht.

10. Verfahren zur Herstellung von zusammengesetzten Paneelen nach Anspruch 1, dadurch gekennzeichnet,

daß die mit den wasserundurchlässigen Polymerschichten versehenen Kartonpappe-Deckauflagen paarweise mit gegeneinander zugekehrten Oberflächen einer Koronaentladungsbehandlung an jeweils einer ihrer Oberflächen zugeführt werden, wobei die mittels Koronaentladung behandelten Flächen nach außen weisen, und daß die Deckauflagen an jeder dieser freien außenliegenden Oberflächen mit einer Klebebeschichtung versehen im Wechsel mit zentralen Kernen und diese umgebenden Holzrahmen geschichtet werden zu Gruppen von feuchten zusammengesetzten Paneelen, die sodann entweder

a) als Gruppe heißgepresst und später voneinander getrennt werden oder

b) in einzelne Paneele aufgeteilt und einzeln heißgepresst werden.

11. Verfahren zur Herstellung von zusammengesetzten Paneelen nach Anspruch 1, dadurch gekennzeichnet,

daß die mit den wasserundurchlässigen Polymerschichten versehenen Kartonpappe-Deckauflagen paarweise mit gegeneinander zuge- kehrten Oberflächen einer Koronaentladungs- behandlung an jeweils einer ihrer Oberflächen zugeführt werden, wobei die mittels Koronaentladung behandelten Flächen nach außen weisen, und daß die Deckauflagen an jeder dieser freiein außenliegenden Oberflächen mit einer Klebebeschichtung versehen und dann die Deckauflagen eines jeden Paares voneinander getrennt mit ihren Klebeflächen an einen zentralen Kern mit ihn umgebendem Holzrahmen derart angelegt werden, daß ein feuchtes zusammengesetztes Paneel entsteht, das für sich heißgepresst wird.

FIG.I.

FIG.2.

FIG.3.

FIG.4.

FIG.5.

FIG.6.